# EUROPÄISCHE PATENTSCHRIFT

(11) **EP 3 588 609 B1**
(45) Veröffentlichungstag und Bekanntmachung des Hinweises auf die Patenterteilung: **17.05.2023**
(21) Anmeldenummer: 19180007.7
(22) Anmeldetag: 13.06.2019
(51) Int. Cl.: B60K 1/04, H01M 50/242, H01M 50/249

(54) **BATTERIEGEHÄUSE SOWIE KRAFTFAHRZEUG MIT EINEM SOLCHEN BATTERIEGEHÄUSE**
BATTERY HOUSING AND MOTOR VEHICLE WITH SUCH A BATTERY HOUSING
BOÎTIER DE DE BATTERIE AINSI QUE VÉHICULE AUTOMOBILE DOTÉ D'UN TEL BOÎTIER DE BATTERIE

(30) Priorität: 21.06.2018 DE 102018210121
(43) Veröffentlichungstag der Anmeldung: 01.01.2020
(73) Patentinhaber: Volkswagen AG, 38440 Wolfsburg (DE)
(72) Erfinder: Wesche, Carsten, 38104 Braunschweig (DE); Schacht, Stefan, 38100 Braunschweig (DE); Fehner, Henrik, 28259 Bremen (DE); Gerlach, Robin, 38114 Braunschweig (DE)

(56) Entgegenhaltungen:
- DE-A1-102016 013 633
- DE-B3-102016 115 611
- US-A1- 2013 270 863
- US-A1- 2018 134 320

## Beschreibung

Die Erfindung betrifft ein Batteriegehäuse eines elektrisch angetriebenen Kraftfahrzeugs, wobei das Batteriegehäuse eine wannenförmige Aufnahme mit einem Gehäuseboden und mit einem Gehäuserahmen aufweist. Des Weiteren betrifft die Erfindung ein solches Kraftfahrzeug.

Ein elektrisch angetriebenes Kraftfahrzeug weist typischerweise eine Batterie (Traktions-Batterie) auf, welche eine elektrische Maschine zum Antrieb des Kraftfahrzeugs mit Energie versorgt. Dabei ist unter einem elektrisch angetriebenen Kraftfahrzeug insbesondere ein Elektrofahrzeug, welches die zum Antrieb notwendige Energie lediglich in der Batterie speichert (BEV, battery electric vehicle), ein Elektrofahrzeug mit einem Reichweitenverlängerer (REEV, range extended electric vehicle), ein Hybridfahrzeug (HEV, hybrid electric vehicle) und/oder ein Plug-In-Hybridfahr-zeug (PHEV, plug-in hybrid electric vehicle) zu verstehen.

Eine insbesondere unfallbedingte, also durch einen Crash oder einen Aufprall hervorgerufene Krafteinwirkung kann eine Beschädigung der Batterie bewirken. Bei einer solchen Beschädigung kann beispielsweise die in der Batterie gespeicherte Energie explosionsartig freigesetzt werden. Ferner können eine Feuergefahr und/oder ein Gefahr aufgrund einer elektrischen Entladung der Batterie für Fahrzeugpassagiere (Insassen) entstehen.

Beispielsweise wird zur Vermeidung einer Beschädigung der Batterie ein Deformationselement verwendet, welches kinetische Energie eines beim Unfall auf das Deformationselement einwirkenden Objekts aufnimmt und durch dessen Verformung die kinetische Energie in Verformungsenergie umwandelt.

Aus der DE 10 2013 008 428 A1 ist eine Anordnung zur Lagerung mindestens eines in einem Gehäuse angeordneten Antriebsenergiespeichers in einem Kraftfahrzeug bekannt, wobei auf gegenüberliegenden Seiten des Gehäuses zwischen dem Gehäuse und biegesteifen Karosserieelementen jeweils ein erstes und ein zweites Deformationselement angeordnet sind, welche unterschiedliche Kraft-Weg-Kennungen aufweisen. Dabei ist das erste Deformationselement näher an dem Gehäuse angeordnet als das zweite Deformationselement.

Ferner sind zur Vermeidung einer Beschädigung der Batterie beispielsweise (Versteifungs-)Elemente vorgesehen, welche eine Verformung des verhindern sollen. So ist in der DE 10 2016 110 330 A1 ein Gehäuse für eine Fahrzeugbatterie offenbart. Das Gehäuse weist dabei eine Deckelplatte und eine Bodenplatte auf, wobei zwischen der Deckelplatte und der Bodenplatte ein mit diesen verbundener Rahmen angeordnet ist. Dabei sind zur Kraftableitung von auf eine Anbindungsstelle wirkenden Kräften im Rahmen Bleche angeordnet, welche im Querschnitt des Rahmens diagonal verlaufen.

Aus der US 2013/270863 A1 ist eine Aufprallschutzstruktur für Fahrzeuge bekannt. Die Aufprallschutzstruktur umfasst eine Tragstruktur des Fahrzeugs, eine damit gekoppelte Innenschiene und eine mit der Innenschiene gekoppelte Außenschiene. Die Außenschiene hat eine innere Begrenzungswand, die zwischen einem oberen und einem unteren Befestigungsbereich angeordnet ist. Der obere und der untere äußere Befestigungsbereich der Außenschiene sind mit einem oberen und einem unteren Befestigungsbereich der Innenschiene verbunden. Mindestens ein Teil der inneren Begrenzungswand ist von einer Außenwand der Innenschiene so beabstandet, dass sich die innere Begrenzungswand der Außenschiene verformt, wenn die Außenschiene von einer stumpfen Objektbarriere getroffen wird, wodurch die Energie des Aufpralls auf die Außenschiene gedämpft und die Rissausbreitung zwischen der Außenschiene und der Innenschiene aufgehalten wird.

In der US 2018/134320 A1 ist eine Verstärkungseinheit eines Seitenschwellers für ein Elektrofahrzeug beschrieben. Der Seitenschweller umfasst Seitenschweller-Innenverkleidungen und Seitenschweller-Außenverkleidungen, welche jeweils unter gegenüberliegenden Enden einer mittleren Bodenplatte vorgesehen sind. Die Verstärkungseinheit umfasst ein Verstärkungsrohrelement, das zwischen der Innenplatte des Seitenschwellers und der Außenplatte des Seitenschwellers in Längsrichtung der Fahrzeugkarosserie vorgesehen ist, sowie eine Verbindungsvorrichtung, die eine Vielzahl von Befestigungsklammern und eine Vielzahl von Rohrmuttern umfasst. Die Verbindungsvorrichtung befestigt das Verstärkungsrohrelement an der Innenplatte des Seitenschwellers.

Die DE 10 2016 115 611 B3 offenbart einen Batterieträger für ein Elektrofahrzeug, welcher in einem Unterflurbereich eines Elektrofahrzeugs angeordnet ist, wobei der Batterieträger eine Wanne und einen Deckel aufweist. Die Wanne ist aus einem äußeren umlaufenden Rahmen und einem mit dem Boden gekoppelten Rahmen gebildet, wobei an der unteren gegenüberliegenden Seite eine Öffnung ausgebildet ist. Der Rahmen ist hierbei aus einem Hohlprofil gebildet.

In der DE 10 2016 013 633 A1 ist eine Schweller-Bodenstruktur-Anordnung eines Fahrzeugs mit einem unterhalb der Bodenstruktur angeordneten Batteriekasten und einem mit dem Schweller verbundenen Energieabsorptionsmodul offenbart. Das Energieabsorptionsmodul ist sowohl an einen Seitenrahmen des Batteriekastens kraftschlüssig und als auch unterhalb des Schwellers kraftschlüssig an den Schweller angebunden, wobei das Energieabsorptionsmodul wenigstens eine Faserverbundkunststoff-Platte mit einem Wellprofil aufweist, und wobei die Profilrichtung des Wellprofils quer zur Fahrzeuglängsrichtung ausgerichtet ist.

Der Erfindung liegt die Aufgabe zugrunde, ein geeignetes Batteriegehäuse anzugeben, welches eine in diesem aufgenommene Batterie vor einer externen Krafteinwirkung und damit einhergehend vor einer möglichen Beschädigung schützt. Des Weiteren soll ein Kraftfahrzeug mit einem solchen Batteriegehäuse angegeben werden.

Diese Aufgabe wird erfindungsgemäß gelöst durch ein Batteriegehäuse mit den Merkmalen des Anspruchs 1. Ferner wird die Aufgabe erfindungsgemäß gelöst durch ein elektrisch angetriebenes Kraftfahrzeug mit den Merkmalen des Anspruchs 6. Vorteilhafte Weiterbildungen und Ausgestaltungen sind Gegenstand der Unteransprüche.

Hierzu weist das Batteriegehäuse, welches für eine Batterie eines elektrisch angetriebenen Kraftfahrzeugs vorgesehen und eingerichtet ist, eine wannenförmige Aufnahme mit einem Gehäuseboden und mit einem Gehäuserahmen auf. Die Aufnahme bildet dabei einen Gehäuseinnenraum, in welchen insbesondere Batteriemodule oder Zellenpakete der Batterie aufgenommen sind.

Der Gehäuserahmen ist mittels zwei biegesteifen, insbesondere parallel zueinander verlaufenden, Längsseitenprofilen und mittels zwei zu diesen quer verlaufenden biegesteifen Querseitenprofilen gebildet. Dabei weisen die Längsseitenprofile eine dem Gehäuseboden zugewandte untere Profillängsseite und eine dem Gehäuseboden abgewandte obere Profillängsseite auf.

An das jeweilige Längsseitenprofil ist ein Deformationsprofil angeformt, welches im Vergleich zum Längsseitenprofil biegeweicher ist. Das Deformationsprofil ist gehäuseaußenseitig, somit an der dem Gehäuseinnenraum abgewandten Seite des Längsseitenprofils, im Bereich der unteren Profillängsseite, mit anderen Worten gehäusebodenseitig, angeformt und überragt das Längsseitenprofil seitlich. Mit anderen Worten überragt das Deformationsprofil das Längsseitenprofil in einer Richtung (Gehäusebodennormale) senkrecht zu derjenigen Fläche des Gehäusebodens, welche dem Gehäuseinnenraum zugewandt ist, und senkrecht zur Profillängsrichtung, in welcher sich das Deformationsprofil und das Längsseitenprofil erstrecken. Diese Richtung definiert die Normale des Längsseitenprofils. Das Längsseitenprofil und das Deformationsprofil bilden somit im Querschnitt, also mit einer Schnittebene senkrecht zur Profillängsrichtung, im Wesentlichen eine L-Form, wobei der vergleichsweise lange (vertikale) L-Schenkel das Längsseitenprofil und der vergleichsweise kurze (horizontale) L-Schenkel das Deformationsprofil bilden.

Vorteilhafterweise bewirkt eine extern eingeleitete Kraft in Richtung der Normale des Längsseitenprofils auf den Gehäuserahmen dessen Verformung (Deformation). Eine solche Kraft ist beispielsweise durch einen Seitenaufprall (Crash, Unfall) bewirkt. Dabei erfolgt zunächst die Deformation des Deformationsprofils vor einer Deformation des Längsseitenprofils aufgrund der biegesteiferen Ausgestaltung des Längsseitenprofils im Vergleich zum Deformationsprofil. So wird kinetische Energie eines auf das Deformationsprofil einwirkenden (Aufprall-)Körpers zumindest teilweise zur Verformungsarbeit herangezogen. Eine Deformation des Längsseitenprofils in den Gehäuseinnenraum, also zu den Batteriemodulen bzw. zu den Zellpaketen der Batterie hin, und eine damit einhergehende Beschädigung aufgrund der insbesondere aufprallbedingten Krafteinwirkung ist somit vermieden oder zumindest ist die Gefahr einer solchen Beschädigung erheblich verringert.

Zur Erhöhung der Biegesteifigkeit und zur Vermeidung eines Einknickens bzw. Verbiegens, weist das jeweilige Längsseitenprofil eine Anzahl an parallel zum Gehäuseboden verlaufenden Querstreben auf. So weist das Längsseitenprofil eine entsprechende Anzahl an in Richtung der Normalen des Gehäusebodens übereinander angeordnete Kammern auf.

Gemäß einer vorteilhaften Weiterbildung weist das jeweilige Deformationsprofil mindestens eine gegen die Normale des Längsseitenprofils geneigte Diagonalstrebe auf. Das Deformationsprofil weist eine Biegesteifigkeit auf, welche mittels eines entsprechenden Verlaufs der Diagonalstrebe beeinflusst ist. So ist aufgrund der Diagonalstrebe das Deformationselement ausreichend biegesteif, um eine möglichst große Energie (Energiemenge) zu dessen Deformation zu verwenden, wobei jedoch das Deformationsprofil allenfalls biegeweicher als das Längsseitenprofil ist.

Die Diagonalstrebe erfüllt dabei einen weiteren Zweck. So stützt diese sich in vorteilhafter Ausgestaltung an einer Profilwand (Profilaußenwand) des Deformationsprofils derart ab, dass eine, insbesondere in Richtung der Normalen des Längsseitenprofils, auf das Deformationsprofil einwirkende Kraft in den Gehäuseboden oder in einen Aufsetzschutz (Unterfahrschutz) eingeleitet wird. Der Aufsetzschutz ist dabei auf der dem Gehäuseinnenraum abgewandten Seite des Gehäusebodens angeordnet. Vorzugsweise weist das Deformationsprofil jeweils eine Diagonalstrebe sowohl zur Kraftleitung in den Gehäuseboden als auch eine Diagonalstrebe zur Kraftleitung in den Aufsetzschutz auf. Hierbei stützt sich die Diagonalstrebe insbesondere in einem Bereich der Profilwand ab, welcher Bereich zumindest bei bereits erfolgter (Teil-)Deformation aufgrund einer entsprechenden Krafteinwirkung am Gehäuseboden bzw. am Aufsetzschutz anliegt, so dass eine entsprechende Kraftleitung (Kraftableitung, Kraftübertragung) ermöglich ist, also die Diagonalstrebe in Wirkverbindung mit dem Gehäuseboden bzw. mit dem Aufsetzschutz steht.

Zusammenfassend erfüllt die Diagonalstrebe des Deformationsprofils eine Doppelfunktion. Zum einen dient diese der Kraftleitung der in das Deformationsprofil eingeleiteten Kraft in den Gehäuseboden bzw. in den Aufsetzschutz. Die Diagonalstrebe ist also ein Kraftwandler. Zum anderen ist die Biegesteifigkeit des Deformationsprofils abhängig vom Verlauf der Diagonalstrebe im Deformationsprofil.

Gemäß einer vorteilhaften Weiterbildung weist das Deformationsprofil eine erste Profilschulter auf, welche den Gehäuseboden auf der dem Gehäuseinnenraum abgewandten Bodenunterseite überragt. Die Profilschulter ist somit ein Anschlag des Deformationsprofils an eine Stirnseite des Gehäusebodens. Die Stirnseite des Gehäusebodens ist dabei diejenige Schmalseite des Gehäusebodens, welche der ersten Profilschulter des Deformationsprofils zugewandt ist, also insbesondere diejenige Schmalseite des Gehäusebodens, deren Normale parallel zur Normalen des Längsseitenprofils verläuft.

Alternativ oder zusätzlich erfolgt gemäß einer geeigneten Weiterbildung in analoger Weise eine Kraftleitung der in das Deformationsprofil eingeleiteten und in Richtung der Normale des Längsseitenprofils wirkenden Kraft an den Aufsetzschutz mittels einer zweiten Profilschulter (Fanghaken), welche (welcher) an der dem Längsseitenprofil abgewandten Unterseite des Deformationsprofils vorgesehen ist. Hierbei überragt die zweite Profilschulter den Aufsetzschutz entlang der Gehäusebodennormalen vom Gehäuseboden zum Aufsetzschutz. Die zweite Profilschulter ist somit ein Anschlag des Deformationsprofils an eine Stirnseite des Aufsetzschutzes. In analoger Weise ist die Stirnseite des Aufsetzschutzes diejenige Schmalseite des Aufsetzschutzes, welche der zweiten Profilschulter des Deformationsprofils zugewandt ist.

Vorzugsweise weist das Deformationsprofil sowohl die erste Profilschulter als auch die zweite Profilschulter auf. Erfolgt aufgrund der Verformung des Deformationsprofils ein Anschlagen der ersten Profilschulter an die Stirnseite des Gehäusebodens bzw. der zweiten Profilschulter an die Stirnseite des Aufsetzschutzes, so wird die in das Deformationsprofil eingeleitete Kraft nicht nur mittels der Diagonalstreben an den Gehäuseboden bzw. an den Aufsetzschutz abgeleitet, sondern zusätzlich mittels der ersten bzw. mittels der zweiten Profilschulter. Auf diese Weise ist eine Kraftleitung auf die Batteriemodule der Batterie und eine entsprechend mögliche Beschädigung dieser vorteilhaft weiter vermieden.

In den Gehäuseinnenraum ist eine Anzahl an senkrecht zum Gehäuseboden und senkrecht zu den Längsseitenprofilen orientierten Querträgern eingebracht. Dabei liegt an jedem der Längsseitenprofile zumindest einer der Querträger mit dessen ersten Stirnseite an.

Geeigneter Weise ist in den Gehäuseinnenraum ein zu den Querträgern quer, also in Profillängsrichtung der Längsseitenprofile, verlaufender Längsträger aufgenommen, an welchem die Querträger unter Bildung einer fachwerkartigen Anordnung mit deren zweiten Stirnseiten anliegen. So wird die Batterie bei einer auf den Gehäuserahmen in Richtung der Normale des Längsseitenprofils wirkenden Kraft, insbesondere aufgrund der Kraftleitenden Wirkung der Querträger und deren fachwerkartigen Anordnung im Batteriegehäuse, vergleichsweise sicher vor einer Beschädigung geschützt.

Jeder der Querträger weist zur Erhöhung dessen Biegesteifigkeit eine Anzahl von senkrecht emporstehenden Rippen auf, welche sich ausgehend von der ersten Stirnseite zur gegenüberliegenden zweiten Stirnseite des Querträgers und/oder schräg verlaufend, also gegen die mittels des Gehäusebodens aufgespannten Ebene geneigt, zum Gehäuseboden hin erstrecken. Insbesondere ist ein (Ab- oder Ein-)Knicken oder ein Verbiegen des Querträgers in Profillängsrichtung des Längsseitenprofils verhindert. So ist eine Biegung oder ein Knicken um eine sich im Wesentlichen in Gehäusebodennormale erstreckende Biegeachse verhindert. Dem liegt die Überlegung zugrunde, dass das Flächenträgheitsmoment, was auch als Flächenmoment 2. Grades bezeichnet wird, des Querträgers bezüglich dieser Biegeachse mittels der Rippen vergrößert ist. Mittels der Rippen wird eine auf die erste Stirnseite des Querträgers einwirkende Kraft vorteilhafterweise in den Längsträger und/oder aufgrund der Neigung der Rippen entsprechend in den Gehäuseboden abgeleitet.

Die Querstreben der Längsseitenprofile fluchten an der ersten Stirnseite des Querträgers mit dessen Rippen. Mit anderen Worten weisen die Enden der Rippen an der ersten Stirnseite des jeweiligen Querträgers den gleichen Abstand zur mittels des Gehäusebodens aufgespannten Ebene auf wie die jeweils zugeordnete Querstrebe des Längsseitenprofils. Infolge dessen ist eine verbesserte Leitung (Übertragung) der in Richtung der Normalen des Längsseitenprofils wirkenden auf das jeweilige Längsseitenprofil wirkenden Kraft an die Querträger und von diesen in den Gehäuseboden und/oder in den Längsträger realisiert. Somit ist eine Verformung des Längsseitenprofils vorteilhaft vermieden oder zumindest eine Gefahr einer Beschädigung der Batterie verringert.

Die Profile, also die Querseitenprofile mit daran angeformten Deformationsprofilen, sowie die Längsseitenprofile mit daran angeformten Deformationsprofilen sind geeigneter Weise mittels Strangpressen hergestellt und insbesondere aus Aluminium gebildet.

Gemäß einer vorteilhaften Ausgestaltung weist ein elektrisch angetriebenes Kraftfahrzeug, im Folgenden kurz auch als Kraftfahrzeug bezeichnet, ein Batteriegehäuse in einer der oben beschriebenen Varianten auf. Insbesondere ist dabei der Gehäuserahmen des Batteriegehäuses mittels Längsseitenprofilen gebildet, wobei an jeder der Längsseitenprofile gehäuseaußenseitig und gehäusebodenseitig ein Deformationsprofil mit mindestens einer gegen die Normale des Längsseitenprofils geneigten Diagonalstrebe angeformt ist.

Ferner weist das Kraftfahrzeug zwei sogenannte Schweller auf, welche beabstandet und vorzugsweise parallel zueinander verlaufen, wobei sich die Schweller in einer auch als X-Richtung bezeichneten Fahrzeuglängsrichtung, also vom Heck zur Front des Kraftfahrzeugs erstrecken. Die Schweller sind insbesondere untergrundseitig im Kraftfahrzeug angeordnet und ein Bestandteil der (Fahrzeug-)Karosserie des Kraftfahrzeugs. Dabei ist das Batteriegehäuse zwischen den Schwellern angeordnet und jeweils an der dem Längsseitenprofil zugewandten Seite des Deformationsprofils an den entsprechenden Schweller angebunden. Die Profillängsrichtung der Längsseitenprofile verläuft somit parallel zu der Fahrzeuglängsrichtung. Der jeweilige Schweller ist somit in einer auch als Z-Richtung bezeichneten Fahrzeughochrichtung nach (oberhalb) des entsprechenden Deformationsprofils angeordnet.

Die Querseitenprofile weisen bevorzugt ebenfalls zur Erhöhung deren Biegesteifigkeit eine Anzahl an parallel zum Gehäuseboden verlaufenden Querstreben auf. Zusätzlich oder alternativ ist an das jeweilige Querseitenprofil zum Schutz der Batterie in analoger Weise ein Deformationsprofil gehäuseaußenseitig und im Bereich deren dem Gehäuseboden zugewandten unteren Profillängsseite angeformt. Insbesondere aufgrund einer Anordnung weiterer Fahrzeugkomponenten bezüglich der Fahrzeuglängsrichtung vor bzw. hinter dem Batteriegehäuse ist typischerweise jedoch eine auf die Querseitenprofile mit daran angeformten Deformationsprofilen einwirkende Kraft in Richtung der Normalen des Querseitenprofils, also in Fahrzeuglängsrichtung, im Falle eines Unfalls mit Frontal- oder Heckaufprall (Unfalls) kleiner als die Kraft auf die Längsseitenprofile mit daran angeformten Deformationsprofilen in Richtung der Normalen des Längsseitenprofils, also in Fahrzeugquerrichtung bei einem Unfall mit Seitenaufprall. Aufgrund dessen weisen bei weiterhin ausreichendem Schutz für die Batterie in gewichtssparender Weise die an den Querseitenprofilen angeformten Deformationsprofile keine Diagonalstrebe auf. Zusätzlich oder alternativ weisen die Querseitenprofile eine im Vergleich zu den Längsseitenprofilen geringe Anzahl an Querstreben auf.

Gemäß einer vorteilhaften Weiterbildung weisen die Schweller eine Außenhülle mit einer Lasche auf, wobei die Lasche das am jeweiligen Längsseitenprofil angeformte Deformationsprofil an dessen dem Längsseitenprofil abgewandten Seite überdeckt. Somit erstreckt sich die Lasche entgegen der Fahrzeughochrichtung und überdeckt das Deformationsprofil zumindest teilweise bezüglich der Fahrzeugquerrichtung.

Im Falle eines Unfalls mit Seitenaufprall wirkt eine Kraft in Fahrzeugquerrichtung, also in Richtung der Normalen des Längsseitenprofils, und - abhängig von der bzw. je nach Stärke des Aufpralls - wird zumindest die Außenhülle des Schwellers zum Batteriegehäuse hin deformiert. Die Lasche der Außenhülle schlägt gegebenenfalls an das Deformationsprofil an, so dass eine Kraftübertragung der auf den Schweller wirkenden Kraft nicht lediglich aufgrund dessen Anbindung an das Deformationsprofil, sondern zusätzlich durch das Anschlagen der Lasche an dieses erfolgt, weshalb eine verbesserte Kraftableitung in das Deformationsprofil und von dort in den Gehäuseboden und/oder in den Aufsetzschutz erfolgt.

Nachfolgend wird ein Ausführungsbeispiel der Erfindung anhand einer Zeichnung näher erläutert. Darin zeigen:
- Fig. 1: in einer schematischen Draufsicht ein elektrisch angetriebenes Kraftfahrzeug mit zwei Schwellern, zwischen welchen ein Batteriegehäuse für eine Batterie angeordnet ist,
- Fig. 2: in einer perspektivischen Darstellung das Batteriegehäuse mit einer einen Gehäuserahmen aufweisenden wannenförmigen Aufnahme, wobei der Gehäuserahmen mittels zwei Längsseitenprofilen und mittels zwei Querseitenprofilen gebildet ist, und wobei an den Längsseitenprofilen und an den Querseitenprofilen jeweils ein Deformationsprofil angeformt ist,
- Fig. 3: ausschnittsweise einen Querschnitt des Batteriegehäuses, wobei das an das Längsseitenprofil angeformte Deformationsprofil gegen die Normale des Längsseitenprofils geneigte Diagonalstreben aufweisen,
- Fig. 4: in vergrößertem Maßstab den Bereich IV der Fig. 3 ohne den Schweller, und
- Fig. 5: ausschnittsweise einen Längsschnitt des Batteriegehäuses, wobei das an das Querseitenprofil angeformte Deformationsprofil an dessen dem Längsseitenprofil abgewandten Unterseite eine Profilschulter als Anschlag für eine Stirnseite eines Aufsetzschutzes aufweist.

Einander entsprechende Teile und Größen sind in allen Figuren stets mit gleichen Bezugszeichen versehen.

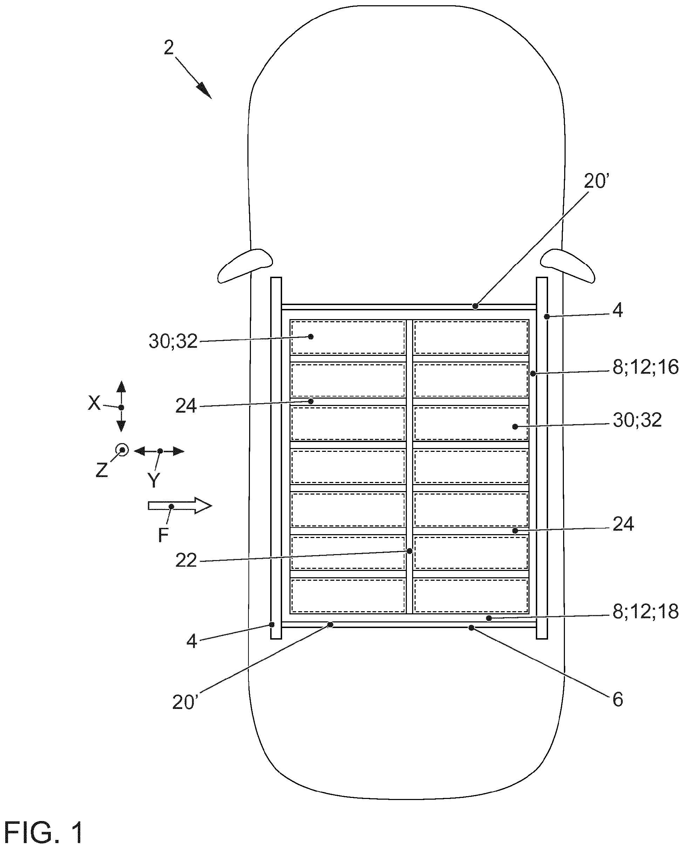

Fig. 1 zeigt ein im Folgenden auch kurz als Kraftfahrzeug bezeichnetes elektromotorisch angetriebenes Kraftfahrzeug 2 in einer schematischen Draufsicht. Dessen Fahrzeuglängsrichtung (X-Richtung) und dessen Fahrzeugquerrichtung (Y-Richtung) sind in einem nebenstehenden Richtungsdiagramm mit X bzw. Y bezeichnet. Das Kraftfahrzeug 2 weist Schweller 4 auf, welche Bestandteil einer nicht weiter dargestellten Karosserie des Kraftfahrzeugs 2 sind. Dabei sind die Schweller 4 parallel und beabstandet zueinander sowie bodenseitig (untergrundseitig) des Kraftfahrzeugs 2 angeordnet. Zudem erstrecken sich die Schweller 4 in Fahrzeuglängsrichtung X.

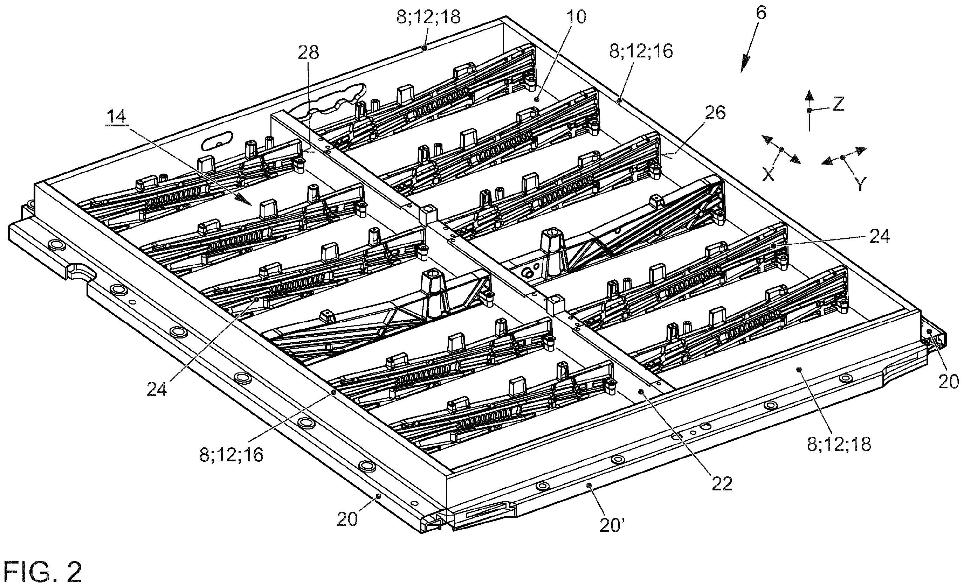

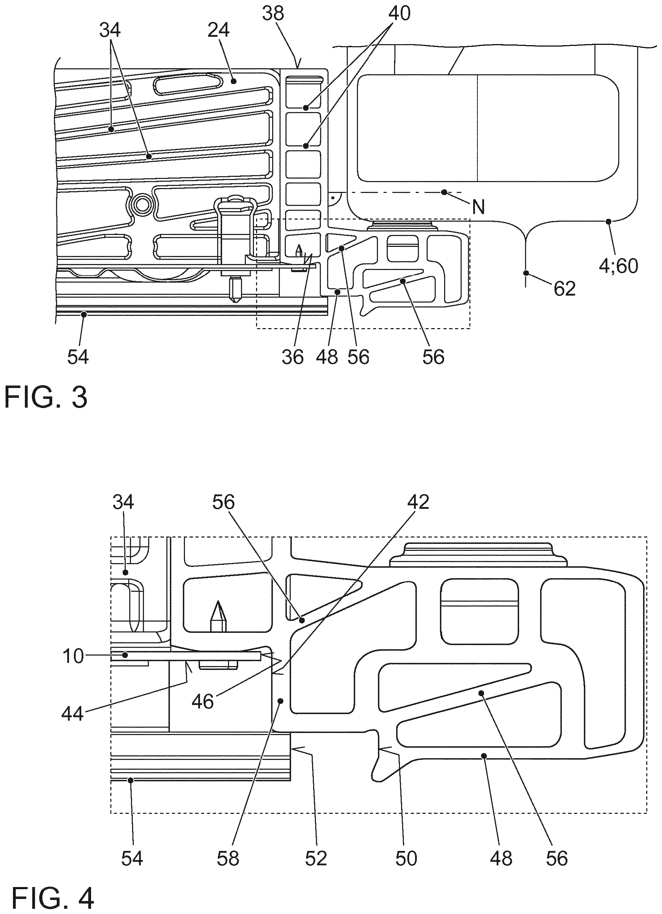

Zwischen den Schwellern 4 ist ein Batteriegehäuse 6 angeordnet, welches in den Figuren 2 bis 5 näher dargestellt ist. Das Batteriegehäuse 6 weist eine wannenförmige Aufnahme 8 mit einem Gehäuseboden 10 und mit einem Gehäuserahmen 12 auf. Die Aufnahme 8 bildet dabei einen Gehäuseinnenraum 14. Mit anderen Worten begrenzt die Aufnahme 8 den Gehäuseinnenraum 14. Der Gehäuserahmen 12 wiederum weist zwei parallel zu den Schwellern 4, also in Fahrzeuglängsrichtung X, verlaufende Längsseitenprofile 16 und zwei zu diesen quer, also in Fahrzeugquerrichtung Y, verlaufende Querseitenprofile 18 auf. An den Längsseitenprofilen 16 sowie an den Querseitenprofilen 18 ist jeweils ein Deformationsprofil 20 bzw. 20' angeformt, welches in den Figuren 3 bis 5 näher gezeigt ist. In Fig. 1 ist dabei das an das jeweilige Längsseitenprofil 16 angeformte Deformationsprofil 20 vom entsprechenden Schweller 4 verdeckt.

Die in Fahrzeugquerrichtung Y auf den entsprechenden Schweller 4 des Kraftfahrzeugs 2 und mittels diesem auf das Batteriegehäuse 6 und insbesondere auf den Gehäuserahmen 12 einwirkende Kraft ist mit dem Bezugszeichen F versehen und mittels eines entsprechenden Pfeils dargestellt. Die Kraft F wird hierbei beispielsweise durch einen Unfall mit einem Aufprall (Seitencrash, Seitenaufprall) eines Unfallkörpers auf das Kraftfahrzeug 2 in Fahrzeugquerrichtung Y hervorgerufen.

In den Gehäuseinnenraum 14 ist ein quaderförmiger Längsträger 22 eingebracht, welcher parallel zu den Längsseitenprofilen 16 und senkrecht zum Gehäuseboden 10 orientiert ist, wobei sich der Längsträger 22 von einem der Querseitenprofile 18 zum anderen Querseitenprofil 18 erstreckt. Ferner ist in den Gehäuseinnenraum 14 eine Anzahl an Querträgern 24 angeordnet. Jeder der Querträger 24 liegt dabei am entsprechenden Längsseitenprofil 16 mit dessen ersten Stirnseite 26 an. Die gegenüberliegende, zweite Stirnseite 28 des jeweiligen Querträgers 24 liegt am Längsträger 22, und eine Unterseite des jeweiligen Querträgers 24 liegt am Gehäuseboden 10 an. Dabei sind die Querträger 24 quer zu den Längsseitenprofil 16 und zum Längsträger 22 orientiert. Somit erstrecken sich die Querträger 24 in Fahrzeugquerrichtung Y. Die Querträger 24 sowie der Längsträger 22 bilden eine fachwerkartige Struktur. In den Gehäuseinnenraum 14 zwischen den Querträger 24 bzw. zwischen den Querträgern 24 und dem Gehäuserahmen 12 sind punktiert dargestellte Batteriemodule 30 aufgenommen, welche die (Traktions-)Batterie 32 bilden.

Jeder der Querträger 24 weist eine Anzahl an senkrecht von diesen abstehende Rippen 34 auf. Die Rippen 34 erstrecken sich im Wesentlichen in Fahrzeugquerrichtung Y, wobei die Rippen 34 zumindest abschnittsweise gegen eine mittels des Gehäusebodens 10 aufgespannte Ebene geneigt sind. Eine Teilanzahl der Rippen 34 erstreckt sich dabei von der ersten Stirnseite 26 zur zweiten Stirnseite 28 des jeweiligen Querträgers 24. Die anderen Rippen 34 erstrecken sich von der ersten Stirnseite 26 des jeweiligen Querträgers 24 schräg verlaufend zum Gehäuseboden 10 hin. Die Rippen 34 weisen hierbei eine Doppelfunktion auf. Sie bewirken eine Kraftleitung einer auf die erste Stirnseite 26 des Querträgers 24 einwirkenden Kraft in den Längsträger 22 und aufgrund deren Neigung zum Gehäuseboden 10 hin in den Gehäuseboden 10. Des Weiteren dienen die Rippen 34 der Erhöhung der Biegesteifigkeit des jeweiligen Querträgers 24. Zusammenfassend wirkt der jeweilige Querträger 24 als sogenannter Kraftwandler. Er nimmt dabei insbesondere extern eingeleitete Kräfte auf und/oder leitet diese ab.

Die Schnittebene des in Fig. 3 dargestellten Querschnitts ist senkrecht zu einer Profillängsrichtung des Längsseitenprofils 16. Die Profillängsrichtung ist dabei diejenige Richtung, in welcher sich das Profil des Längsseitenprofils 16 erstreckt; hier ist die Profillängsrichtung also parallel zur Fahrzeuglängsrichtung X. Die Längsseitenprofile 16 weisen jeweils eine dem Gehäuseboden 10 zugewandte untere Profillängsseite 36 und eine dem Gehäuseboden 10 abgewandte obere Profillängsseite 38 auf. Das Deformationsprofil 20 ist an der dem Gehäuseinnenraum 14 abgewandten Seite des Längsseitenprofils 16 im Bereich der unteren Profillängsseite 36, also gehäusebodenseitig, angeformt und überragt das Längsseitenprofil 16 seitlich. Das Deformationsprofil 20 überragt also das Längsseitenprofil 16 in Richtung einer Normalen N des Längsseitenprofils 16, welche senkrecht zur derjenigen Fläche des Gehäusebodens 10 verläuft, welche dem Gehäuseinnenraum 14 zugewandt und senkrecht zur Profillängsrichtung des Längsseitenprofils 16 ist.

Das Längsseitenprofil 16 weist zur Erhöhung dessen Biegesteifigkeit gegen eine in Richtung der Normalen N auf dieses wirkende Kraft Querstreben 40 auf, welche parallel zum Gehäuseboden 10 verlaufen. Diese Querstreben 40 fluchten dabei an der ersten Stirnseite 26 des entsprechenden Querträgers 24 mit dessen Rippen 34. Mit anderen Worten weisen die Rippen 34 und deren zugeordnete Querstreben 40 jeweils den gleichen Abstand zur mittels des Gehäusebodens 10 aufgespannten Ebene auf, weshalb eine Kraftleitung der auf das Längsseitenprofil 16 wirkenden Kraft an den jeweiligen Querträger 24 verbessert ist.

Das Deformationsprofil 20 weist eine erste Profilschulter 42 auf, welche eine den Gehäuseboden 10 auf der dem Gehäuseinnenraum 14 abgewandten Bodenunterseite 44 überragt. Die erste Profilschulter 42 überragt also den Gehäuseboden 10 entgegen einer Fahrzeughochrichtung Z. Dabei ist die erste Profilschulter 42 als ein Anschlag des Deformationsprofils 20 gegen eine Stirnseite 46 des Gehäusebodens 10 vorgesehen und eingerichtet. Unter der Stirnseite 46 des Gehäusebodens 10 ist hierbei diejenige Schmalseite des Gehäusebodens 10 zu verstehen, deren Normale parallel zur Normalen N des Längsseitenprofils 16 verläuft. So ist die Stirnseite 46 des Gehäusebodens 10 der ersten Profilschulter 42 des entsprechenden Deformationsprofils 20 zugewandt.

Des Weiteren weist das Deformationsprofil 20 an dessen dem Längsseitenprofil 16 abgewandten Unterseite 48 eine zweite Profilschulter 50 als Anschlag des Deformationsprofils 20 gegen eine Stirnseite 52 eines Aufsetzschutzes (Unterfahrschutz) 54 auf. Der Aufsetzschutz 54 ist auf der dem Gehäuseinnenraum 14 abgewandten Seite des Gehäusebodens 10 angeordnet und der Bodenunterseite 44 zugewandt, wobei dieser zum Gehäuseboden 10 parallel verläuft.

Bei einer entsprechenden Verformung des Deformationsprofils 16 erfolgt ein Anschlagen der ersten Profilschulter 42 an die Stirnseite 46 des Gehäusebodens 10 bzw. der zweiten Profilschulter 50 an die Stirnseite 52 des Aufsetzschutzes 54. Auf diese Weise wird eine in das Deformationsprofil 16 eingeleitete Kraft mittels der ersten Profilschulter 42 bzw. mittels der zweiten Profilschulter 50 an den Gehäuseboden 10 bzw. an den Aufsetzschutz 54 abgeleitet.

Jedes der an die Längsseitenprofile 16 angeformten Deformationsprofile 20 weist gegen die Normale N der Längsseitenprofile 16 geneigte Diagonalstreben 56 auf. Diese stützen sich an einer Profilwand (Profilaußenwand) 58 des Deformationsprofils 20 derart ab, dass eine in Richtung der Normalen N des Längsseitenprofils 16 auf das Deformationsprofil 20 einwirkende Kraft in den Gehäuseboden 10 oder in den Aufsetzschutz 54 eingeleitet wird. Das Deformationsprofil 20 weist hierzu jeweils eine Diagonalstrebe 56 zur Kraftleitung in den Gehäuseboden 10 und eine Diagonalstrebe 56 zur Kraftleitung in den Aufsetzschutz auf, wobei sich die Diagonalstrebe 56 in einem Eckbereich der ersten Profilschulter 42 bzw. der zweiten Profilschulter 50 abstützt. Bei einer Deformation des Deformationsprofils 20 aufgrund einer entsprechend großen Kraft F liegen die Diagonalstreben 56 am Gehäuseboden 10 bzw. am Aufsetzschutz 54 für eine Kraftleitung in den Gehäuseboden 10 bzw. in den Aufsetzschutz 54 an.

Ferner ist in Fig. 3 und Fig. 4 erkennbar, dass das Batteriegehäuse 6 jeweils an der dem Längsseitenprofil 16 zugewandten Seite des Deformationsprofils 20 an den entsprechenden Schweller 4 angebunden, d. h. an diesem befestigt oder gehalten ist. Hierbei weist der Schweller 4 eine Außenhülle 60 mit einer Lasche 62 auf. Die Lasche 62 überdeckt dabei das am entsprechenden Längsseitenprofil 16 angeformte Deformationsprofil 20 an dessen dem Längsseitenprofil 16 abgewandten Seite. So erstreckt sich die Lasche 62 entgegen der Fahrzeughochrichtung Z und überdeckt das Deformationsprofil 16 teilweise bezüglich der Fahrzeugquerrichtung Y.

Wirkt die Kraft F auf den Schweller 4, so wird - abhängig von der bzw. je nach Stärke des Seitenaufpralls -zumindest die Außenhülle 60 des Schwellers zum Batteriegehäuse 6 hin deformiert. Bei entsprechend starker Deformation der Außenhülle 60 schlägt dessen Lasche 62 an das Deformationsprofil 20 an. Folglich erfolgt eine Kraftübertragung von der auf den Schweller 4 wirkenden Kraft F zusätzlich zur Kraftübertragung aufgrund dessen Anbindung an das Deformationsprofil 20 mittels des Anschlagens der Lasche 62 an das Deformationsprofil 20.

In einer nicht weiter dargestellten Variante weist das Deformationsprofil 20 lediglich eine Diagonalstrebe 56 auf. Diese stützt sich dabei derart an der Profilwand 58 ab, dass lediglich eine Kraftleitung in den Aufsetzschutz 54 bzw. in den Gehäuseboden 10 erfolgt. Gemäß einer weiteren nicht dargestellten Variante weisen die Querträger 24 zusätzlich zu den Rippen 34 eine Anzahl an Sicken auf. Dabei fluchten die jeweiligen Querstreben 40 des Längsseitenprofil 16 an der ersten Stirnseite 26 des Querträgers 24 mit Abschnitten einer die Sicke begrenzenden Sickenwand, welche Abschnitte parallel zum Gehäuseboden 10 verlaufen.

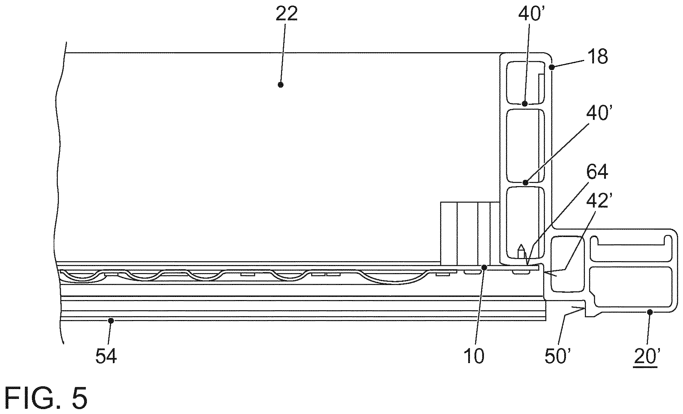

Die Fig. 5 zeigt einen Längsschnitt des Gehäuses 6 mit einer Schnittebene senkrecht zu einer Profillängsrichtung der Querseitenprofile 18. Die Querseitenprofile 18 weisen dabei in analoger Weise zu den Längsseitenprofilen 16 ebenfalls Querstreben 40' zur Erhöhung deren Biegesteifigkeit auf. Ferner ist das Deformationsprofil 20' gehäuseaußenseitig und im Bereich einer dem Gehäuseboden 10 zugewandten unteren Profillängsseite 64 des Querseitenprofils 18 angeformt. Jedoch weist das jeweilige Querseitenprofil 18 in gewichtssparender Weise im Vergleich zu den Längsseitenprofilen 16 eine geringere Anzahl an Querstreben 40' auf, und das Deformationsprofil 20' weist keine Diagonalstreben 56 auf. Dabei ist die Batterie 32 aufgrund von bezüglich der Fahrzeuglängsrichtung X vor bzw. hinter dem Batteriegehäuse 6 angeordneten, nicht weiter dargestellten Fahrzeugkomponenten vor einer unfallbedingten Kraft in Fahrzeuglängsrichtung X ausreichend geschützt. Zusätzlich weist das an das jeweilige Querseitenprofil 18 angeformte Deformationsprofil 20' in analoger Weise zum an das jeweilige Längsseitenprofil 16 angeformten Deformationsprofil 20 eine erste Profilschulter 42' und eine zweite Profilschulter 50' als Anschlag für den Gehäuseboden 10 bzw. für den Aufsetzschutz 54 auf.

Die Erfindung ist nicht auf das vorstehend beschriebene Ausführungsbeispiel beschränkt. Vielmehr können auch andere Varianten der Erfindung vom Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, innerhalb des Schutzumfangs der Ansprüche.

### Bezugszeichenliste

- 2: Kraftfahrzeug
- 4: Schweller
- 6: Batteriegehäuse
- 8: Aufnahme
- 10: Gehäuseboden
- 12: Gehäuserahmen
- 14: Gehäuseinnenraum
- 16: Längsseitenprofil
- 18: Querseitenprofil
- 20,20`: Deformationsprofil
- 22: Längsträger
- 24: Querträger
- 26: ersten Stirnseite des Querträgers
- 28: zweite Stirnseite des Querträgers
- 30: Batteriemodul
- 32: Batterie
- 34: Rippe
- 36: untere Profillängsseite des Längsseitenprofils
- 38: obere Profillängsseite des Längsseitenprofils
- 40,40`: Querstrebe
- 42, 42': erste Profilschulter
- 44: Bodenunterseite
- 46: Stirnseite des Gehäusebodens
- 48: Unterseite
- 50,50`: zweite Profilschulter
- 52: Stirnseite des Aufsetzschutzes
- 54: Aufsetzschutz
- 56: Diagonalstrebe
- 58: Profilwand
- 60: Außenhülle
- 62: Lasche
- 64: untere Profillängsseite des Querseitenprofils

- F: Kraft
- N: Normale des Längsseitenprofils
- X: Fahrzeuglängsrichtung
- Y: Fahrzeugquerrichtung
- Z: Fahrzeughochrichtung

## Patentansprüche

1. Batteriegehäuse (6) für eine Batterie (32) eines elektrisch angetriebenen Kraftfahrzeugs (2), aufweisend eine wannenförmige Aufnahme (8) mit einem Gehäuseboden (10) und mit einem Gehäuserahmen (12), wobei die Aufnahme (8) einen Gehäuseinnenraum (14) bildet,
- wobei der Gehäuserahmen (12) mittels zwei biegesteifen Längsseitenprofilen (16) und mittels zwei zu diesen quer verlaufenden biegesteifen Querseitenprofilen (18) gebildet ist,
- wobei die Längsseitenprofile (16) eine dem Gehäuseboden (10) zugewandte untere Profillängsseite (36) und eine dem Gehäuseboden (10) abgewandte obere Profillängsseite (38) aufweisen,
- wobei an das jeweilige Längsseitenprofil (16) ein Deformationsprofil (20) angeformt ist, welches das Längsseitenprofil (16) gehäuseaußenseitig im Bereich der unteren Profillängsseite (36) seitlich überragt,
- wobei in den Gehäuseinnenraum (14) eine Anzahl an senkrecht zum Gehäuseboden (10) und senkrecht zu den Längsseitenprofilen (16) orientierten Querträgern (24) eingebracht ist, wobei an jeder der Längsseitenprofile (16) zumindest einer der Querträger (24) anliegt, und
- wobei der jeweilige Querträger (24) eine Anzahl von Rippen (34) aufweist, welche sich ausgehend von einer am Längsseitenprofil (16) anliegenden ersten Stirnseite (26) des Querträgers (24) zur gegenüberliegenden zweiten Stirnseite (28) des Querträgers (24) und/oder schräg verlaufend zum Gehäuseboden (10) hin erstrecken, und
- wobei das jeweilige Längsseitenprofil (16) eine Anzahl an parallel zum Gehäuseboden (10) verlaufenden Querstreben (40) aufweist, welche an der ersten Stirnseite (26) des Querträgers (24) mit dessen Rippen (34) fluchten.

2. Batteriegehäuse (6) nach Anspruch 1,
**dadurch gekennzeichnet,**
**dass** das jeweilige Deformationsprofil (20) mindestens eine gegen die Normale (N) des Längsseitenprofils (16) geneigte Diagonalstrebe (56) aufweist.

3. Batteriegehäuse (6) nach Anspruch 2,
**dadurch gekennzeichnet,**
**dass** sich die Diagonalstrebe (56) an einer Profilwand (58) des Deformationsprofils (20) derart abstützt, dass eine auf das Deformationsprofil (20) einwirkende Kraft in den Gehäuseboden (10) oder in einen auf der dem Gehäuseinnenraum (14) abgewandten Seite des Gehäusebodens (10) angeordneten Aufsetzschutz (54) eingeleitet wird.

4. Batteriegehäuse (6) nach einem der Ansprüche 1 bis 3,
**dadurch gekennzeichnet,**
**dass** das Deformationsprofil (20) eine den Gehäuseboden (10) auf der dem Gehäuseinnenraum (14) abgewandten Bodenunterseite (44) überragende erste Profilschulter (42) als Anschlag des Deformationsprofils (20) an eine Stirnseite (46) des Gehäusebodens (10) aufweist.

5. Batteriegehäuse (6) nach Anspruch 3 oder 4,
**dadurch gekennzeichnet,**
**dass** an der dem Längsseitenprofil (16) abgewandten Unterseite (48) des Deformationsprofils (20) eine zweite Profilschulter (50) als Anschlag des Deformationsprofils (20) an eine Stirnseite (52) des Aufsetzschutzes (54) vorgesehen ist.

6. Elektrisch angetriebenes Kraftfahrzeug (2), mit einem Batteriegehäuse (6) nach einem der Ansprüche 1 bis 5 und mit zwei zueinander beabstandet verlaufenden Schwellern (4),
- wobei das Batteriegehäuse (6) zwischen den Schwellern (4) angeordnet ist,
und
- wobei das Batteriegehäuse (6) jeweils an der dem Längsseitenprofil (16) zugewandten Seite des Deformationsprofils (20) an den entsprechenden Schweller (4) angebunden ist.

7. Kraftfahrzeug (2) nach Anspruch 6,
**dadurch gekennzeichnet,**
**dass** die Schweller (4) eine Außenhülle (60) mit einer Lasche (62) aufweisen, wobei die Lasche (62) die dem Längsseitenprofil (16) abgewandte Seite des Deformationsprofils (20) überdeckt.

## Claims

1. Battery housing (6) for a battery (32) of an electrically driven motor vehicle (2), having a trough-like receptacle (8) with a housing base (10) and with a housing frame (12), wherein the receptacle (8) forms a housing interior (14),
- wherein the housing frame (12) is formed by means of two rigid longitudinal side profiles (16) and by means of two rigid transverse side profiles (18) extending transversely to the latter,
- wherein the longitudinal side profiles (16) have a lower profile longitudinal side (36) facing the housing base (10) and an upper profile longitudinal side (38) facing away from the housing base (10),
- wherein a deformation profile (20) is moulded onto the respective longitudinal side profile (16) and projects laterally beyond the longitudinal side profile (16) on the outer side of the housing in the region of the lower profile longitudinal side (36),
- wherein a number of crossmembers (24) arranged at right angles to the housing base (10) and at right angles to the longitudinal side profiles (16) are introduced into the housing interior (14), wherein at least one of the crossmembers (24) rests on each of the longitudinal side profiles (16), and
- wherein the respective crossmember (24) has a number of ribs (34) which, starting from a first front face (26) of the crossmember (24) resting on the longitudinal side profile (16), extend to the opposite second front face (28) of the crossmember (24) and/or obliquely towards the housing base (10), and
- wherein the respective longitudinal side profile (16) has a number of transverse struts (40) extending parallel to the housing base (10), which are flush with the first front face (26) of the crossmember (24) with its ribs (34).

2. Battery housing (6) according to Claim 1,
**characterized in that**
the respective deformation profile (20) has at least one diagonal strut (56) inclined with respect to the normal (N) to the longitudinal side profile (16).

3. Battery housing (6) according to Claim 2,
**characterized in that**
the diagonal strut (56) is supported on a profile wall (58) of the deformation profile (20) in such a way that a force acting on the deformation profile (20) is introduced into the housing base (10) or into a bottom guard (54) arranged on the side of the housing base (10) that faces away from the housing interior (14).

4. Battery housing (6) according to one of Claims 1 to 3,
**characterized in that**
the deformation profile (20) has a first profile shoulder (42) projecting beyond the housing base (10) on the underside of the base (44) that faces away from the housing interior (14), as a stop of the deformation profile (20) on an end face (46) of the housing base (10) .

5. Battery housing (6) according to Claim 3 or 4,
**characterized in that**
a second profile shoulder (50) is provided on the underside (48) of the deformation profile (20) that faces away from the longitudinal side profile (16), as a stop of the deformation profile (20) on an end face (52) of the bottom guard (54).

6. Electrically driven motor vehicle (2), having a battery housing (6) according to one of Claims 1 to 5 and having two sills (4) extending at a distance from each other,
- wherein the battery housing (6) is arranged between the sills (4), and
- wherein the battery housing (6) is in each case attached to the corresponding sill (4) on the side of the deformation profile (20) that faces the longitudinal side profile (16).

7. Motor vehicle (2) according to Claim 6,
**characterized in that**
the sills (4) have an outer envelope (60) with a fin (62), wherein the fin (62) covers the side of the deformation profile (20) that faces away from the longitudinal side profile (16).

## Revendications

1. Boîtier de batterie (6) pour une batterie (32) d'un véhicule automobile électrique (2), présentant un logement en forme de cuvette (8) pourvu d'un fond de boîtier (10) et d'un cadre de boîtier (12), le logement (8) constituant un espace intérieur de boîtier (14),
- dans lequel le cadre de boîtier (12) est formé au moyen de deux profilés côté longitudinal (16) rigides en flexion et au moyen de deux profilés côté transversal (18) rigides en flexion, s'étendant transversalement à ceux-ci,
- dans lequel les profilés côté longitudinal (16) présentent un côté de profilé longitudinal inférieur (36) tourné vers le fond de boîtier (10) et un côté de profilé longitudinal supérieur (38) détourné du fond de boîtier (10),
- dans lequel un profilé de déformation (20) est rapporté au profilé côté longitudinal (16) respectif et fait saillie latéralement du profilé côté longitudinal (16) du côté extérieur du boîtier au niveau du côté de profilé longitudinal inférieur (36),
- dans lequel un nombre de traverses (24) orientées perpendiculairement au fond de boîtier (10) et perpendiculairement aux profilés côté longitudinal (16) est introduit dans l'espace intérieur de boîtier (14), dans lequel au moins l'une des traverses (24) est adjacente à chacun des profilés côté longitudinal (16), et
- dans lequel la traverse (24) respective présente un nombre de nervures (34) qui s'étendent en partant d'une première face frontale (26), adjacente au profilé côté longitudinal (16), de la traverse (24) jusqu'à la deuxième face frontale (28) opposée de la traverse (24) et/ou en s'étendant en oblique jusqu'au fond de boîtier (10), et
- dans lequel le profilé côté longitudinal (16) respectif présente un nombre de traverses (40) s'étendant en parallèle au fond de boîtier (10) qui sont au niveau de la première face frontale (26) de la traverse (24) alignées sur les nervures (34) de celle-ci .

2. Boîtier de batterie (6) selon la revendication 1, **caractérisé en ce que** le profilé de déformation (20) respectif présente au moins une entretoise diagonale (56) inclinée par rapport à la normale (N) du profilé côté longitudinal (16).

3. Boîtier de batterie (6) selon la revendication 2, **caractérisé en ce que** l'entretoise diagonale (56) prend appui sur un flanc de profilé (58) du profilé de déformation (20) de telle sorte qu'une force agissant sur le profilé de déformation (20) est introduite dans le fond de boîtier (10) ou dans un dispositif anti-contact (54) disposé sur le côté, détourné de l'espace intérieur de boîtier (14), du fond de boîtier (10).

4. Boîtier de batterie (6) selon l'une quelconque des revendications 1 à 3, **caractérisé en ce que** le profilé de déformation (20) présente un premier épaulement de profilé (42) faisant saillie à partir du fond de boîtier (10) sur la face inférieure de fond (44) détournée de l'espace intérieur de boîtier (14), en tant que butée pour le profilé de déformation (20) sur une face frontale (46) du fond de boîtier (10).

5. Boîtier de batterie (6) selon la revendication 3 ou 4, **caractérisé en ce que** sur la face inférieure (48), détournée du profilé côté longitudinal (16), du profilé de déformation (20), un deuxième épaulement de profilé (50) est prévu en tant que butée du profilé de déformation (20) sur une face frontale (52) du dispositif anti-contact (54).

6. Véhicule automobile électrique (2), comprenant un boîtier de batterie (6) selon l'une quelconque des revendications 1 à 5 et deux bas de caisse (4) s'étendant à distance l'un de l'autre,
- dans lequel le boîtier de batterie (6) est disposé entre les bas de caisse (4),
et
- dans lequel le boîtier de batterie (6) est rattaché au bas de caisse (4) correspondant respectivement sur la face, tournée vers le profilé côté longitudinal (16), du profilé de déformation (20).

7. Véhicule automobile (2) selon la revendication 6, **caractérisé en ce que** les bas de caisse (4) présentent une enveloppe extérieure (60) pourvue d'une languette (62), la languette (62) recouvrant la face, détournée du profilé côté longitudinal (16), du profilé de déformation (20).
